# EUROPEAN PATENT APPLICATION

(11) **EP 3 239 280 A1**
(43) Date of publication of application: **01.11.2017**
(21) Application number: 15872520.0
(22) Date of filing: 11.11.2015
(51) Int. Cl.: C10M 107/30, C09D 163/00, C09D 163/02, C10M 169/04, C10M 155/02, C10N 30/06, C10N 40/02

(54) **ANTI-WEAR AGENT**

(30) Priority: 25.12.2014 JP 2014263680; 25.12.2014 JP 2014263681
(71) Applicant: Daicel Corporation, Osaka-shi, Osaka 530-0011 (JP)
(72) Inventor: KIKUCHI, Shinji, Amagasaki-shi Hyogo 661-0964 (JP)
(74) Representative: Jones, Nicholas Andrew
(86) International application number: PCT/JP2015/081755
(87) International publication number: WO 2016/103951

(57) **Abstract**

Provided is an anti-wear agent capable of furnishing an epoxy resin coating film with anti-wear properties. The anti-wear agent is characterized in containing an alicyclic difunctional epoxy and a polymerization initiator or is characterized in containing a difunctional bisphenol A-type epoxy resin, a leveling agent and a polymerization initiator.

## Description

### Technical Field

The present invention relates to an anti-wear agent, and more specifically to an anti-wear agent that is able to furnish an epoxy resin coating film with anti-wear properties.

### Background Art

Sliding members have been used in the prior art in a variety of devices in the internal combustion engines of ships and land vehicles. Various modifications have been made to such sliding members in order to lower the friction coefficient and reduce energy loss, and to meet CAFE standards for environmental protection.

While development of sliding members continues to progress in many aspects, diamond-like carbon (DLC) sliding members that employ DLC as a coating film have also been proposed as sliding members exhibiting satisfactory anti-wear properties.

For example, Japanese Unexamined Patent Publication HEI No. 7-41779 discloses a sliding member having a solid lubricant coating film composed of diamond-like carbon on a sliding surface formed of steel, wherein an intermediate layer formed of silicon, a silicon compound or a compound comprising W, S and O is provided between the sliding surface and the solid lubricant coating film, with a specific example being a DLC film formed on a W-SO film surface by magnetron sputtering, with carbon as the target.

In this prior art, however, it has not been possible to avoid low productivity and high cost since physical vapor deposition is necessary to form the DLC coating film.

### DISCLOSURE OF THE INVENTION

### Problems to be Solved by the Invention

It is therefore an object of the present invention to provide an anti-wear agent that can yield an epoxy resin coating film with anti-wear properties.

### Means for Solving the Problems

The present invention relates to an anti-wear agent comprising an alicyclic difunctional epoxy and a polymerization initiator (hereunder referred to as "anti-wear agent of the first invention").

The invention further relates to an anti-wear agent comprising a difunctional bisphenol A-type epoxy resin, a leveling agent and a polymerization initiator (hereunder referred to as "anti-wear agent of the second invention").

### Effect of the Invention

According to the invention it is possible to obtain an anti-wear agent that can produce an epoxy resin coating film with anti-wear properties.

### Brief Description of the Drawings

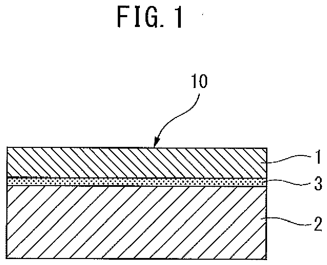

Fig. 1 is a cross-sectional schematic drawing showing an applied example of an anti-wear agent according to one embodiment of the invention.

### Best Mode for Carrying Out the Invention

The following are the specific aspects of the present invention.
1) An anti-wear agent according to the first invention, wherein the alicyclic difunctional epoxy is 3,4,3',4'-diepoxybicyclohexyl represented by the following chemical formula. 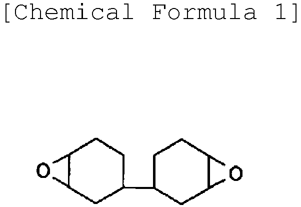
2) The anti-wear agent according to the first invention wherein the resin layer further comprises a leveling agent.
3) The anti-wear agent according to the first invention, wherein the leveling agent is a silicon leveling agent.
4) The anti-wear agent according to the first invention, wherein the proportion of the leveling agent is 0 to 5 parts by mass with respect to 100 parts by mass of the epoxy.
5) The anti-wear agent according to the first invention, wherein the polymerization initiator is a photoacid generating initiator.
6) The anti-wear agent according to the second invention, wherein the difunctional bisphenol A-type epoxy resin has a basic backbone represented by the following chemical formula. 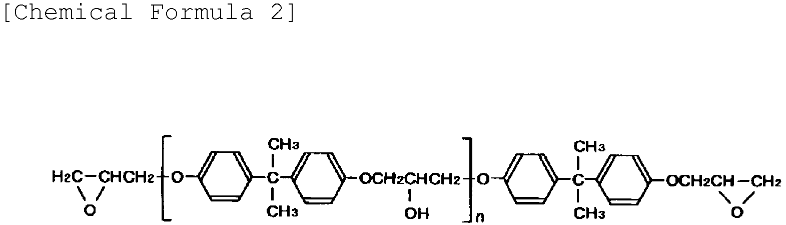
7) A sliding member according to the second invention, wherein the leveling agent is a silicon leveling agent.
8) The anti-wear agent according to the second invention, wherein the proportion of the leveling agent is 1 to 5 parts by mass with respect to 100 parts by mass of the epoxy resin.
9) The anti-wear agent according to the second invention, wherein the polymerization initiator is a photoacid generating initiator.

The present invention will now be described in detail with reference to the accompanying drawings.

A sliding member 10 in which the anti-wear agent of this embodiment of the invention is applied has, as shown in Fig. 1, an epoxy resin undercoat primer layer 3 formed on a metal base 2, and a coating film 1 formed on the undercoat primer layer, the coating film being formed by curing an anti-wear agent layer comprising a difunctional alicyclic epoxy and a polymerization initiator, or an anti-wear agent layer comprising a difunctional bisphenol A-type epoxy resin, a leveling agent and a polymerization initiator.

A sliding member in which the anti-wear agent of the invention is applied, having the construction described above, exhibits an anti-wear effect when coated, under oil-coating conditions, onto a metal part (metal base) that is to be used at high temperature, as will be understood from the results of the examples.

This is entirely unexpected when compared to sliding members that employ polyfunctional acrylate resin-based anti-wear agents that are outside of the scope of the invention.

While a complete theoretical explanation has not yet been devised for why satisfactory anti-wear performance is exhibited by a sliding member employing an anti-wear agent according to an embodiment of the present invention, it is believed to be attributable to the effect of combining the epoxy resin undercoat primer layer with the coating film formed by curing an anti-wear agent layer comprising an alicyclic difunctional epoxy and a polymerization initiator, or an anti-wear agent layer comprising an alicyclic difunctional epoxy, a polymerization initiator and a leveling agent, or an anti-wear agent layer comprising a difunctional bisphenol A-type epoxy resin, a leveling agent and a polymerization initiator.

In a sliding member employing an anti-wear agent according to one embodiment of the invention, the metal base can usually be a metal such as aluminum or iron. Although a single metal such as aluminum or iron is suitable, the metal base may instead be made of an alloy that contains other metals.

The anti-wear agent of the invention is particularly effective when the metal base is aluminum.

The epoxy resin undercoat primer layer can be formed by coating the metal base with an epoxy resin undercoat primer and heating it. The thickness of the epoxy resin undercoat primer layer is preferably in the range of 0.2 to 5 µm, such as in the range of 0.2 to 3 µm, although it will typically be about 2 µm.

The epoxy resin undercoat primer may be an undercoat primer obtained by mixing an epoxy resin, such as a bisphenol A-type epoxy resin or bisphenol F-type epoxy resin, as the main component that is capable of forming a primer layer and has satisfactory affinity for the coating film to be formed on the undercoat primer layer, and also satisfactory heat resistance, a polymerization initiator such as a cationic polymerization initiator, imidazole, hydrazidone, acid anhydride, liquid phenol, or an epoxy adduct-type amine-based compound with an aromatic amine or other amine, and a solvent such as methyl isobutyl ketone (MIBK), tetrahydrofuran, toluene or xylene, as well as an inorganic powder such as silica, titanium oxide, wollastonite, mica, talc, kaolin or chromium oxide, as necessary.

The epoxy resin undercoat primer used may be a commercial product, examples of which include FC primer AL, FC primer EP and Ray Magic 07 (all by Kanae Paint Co., Ltd.), either alone or in mixtures of two or more.

The epoxy resin undercoat primer may be coated onto the metal base and heated to form an epoxy resin undercoat primer layer.

When an anti-wear agent according to an embodiment of the first invention is to be used, the coating film may be formed by curing an anti-wear agent layer comprising a difunctional alicyclic epoxy and a polymerization initiator, or an anti-wear agent layer comprising an alicyclic difunctional epoxy, a polymerization initiator and a leveling agent, preferably to a thickness in the range of 10 to 75 µm, such as in the range of 15 to 50 µm, and typically a thickness of about 40 µm.

The alicyclic difunctional epoxy may be an epoxy represented by the following formula: 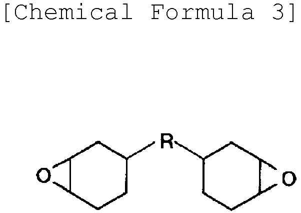 wherein R is a direct bond or a carboxyalkylene group of the formula -CH₂-COO-, - (CH₂)₂-COO-, - (CH₂)₃-COO-, -(CH₂)₄-COO-, -CH₂-COO-CH₂-OOC-CH₂-, -(CH₂)₂-COO-CH₂-OOC-(CH₂)₂-, - (CH₂)₃-COO-CH₂-OOC- (CH₂)₃- or - (CH₂)₃-COO- (CH₂)₂-OOC-(CH₂)₃-].

The alicyclic difunctional epoxy may be 3,4-epoxycyclohexylmethyl-3,4-epoxycyclohexane carboxylate, 6-methyl-3,4-epoxycyclohexylmethyl-6-methyl-3,4-epoxycyclohexane carboxylate, bis(3,4-epoxycyclohexylmethyl) oxalate, bis(3,4-epoxycyclohexylmethyl)adipate, bis(3,4-epoxy-6-methylcyclohexylmethyl)adipate, 2-(3,4-epoxycyclohexyl-5,5-spiro-3,4-epoxy)cyclohexane-m-dioxane, 1-epoxyethyl-3,4-epoxycyclohexane, 3,4,3',4'-diepoxybicyclohexyl or 1,2,5,6-diepoxyhexahydroindane, and is preferably 3,4,3',4'-diepoxybicyclohexyl. The alicyclic difunctional epoxy is preferably one that is liquid at room temperature, from the viewpoint of easy handling and miscibility.

The polymerization initiator may be a cationic polymerization initiator, an azo-based initiator, a peroxide initiator or a persulfate initiator.

The proportion of the polymerization initiator will differ depending on the type of polymerization initiator, but for a cationic polymerization initiator it is preferably in the range of 0.01 to 10 parts by mass, such as 0.1 to 5 parts by mass, with respect to 100 parts by mass of the epoxy, and for an azo-based initiator, peroxide initiator or persulfate initiator it is preferably in the range of 0.1 to 20 parts by mass, such as 0.1 to 10 parts by mass.

The cationic polymerization initiator may be a hot acid generating initiator or a photoacid generating initiator, which generates a Lewis acid or Bronsted acid when the polymerization initiator decomposes under heat or light, with photoacid generating initiators being preferred.

Hot acid generating initiators include onium salt-type acid generators wherein the cationic portion is a complex ion such as a sulfonium salt, diazonium salt, ammonium salt, phosphonium salt, iodonium salt or sulfoxonium salt and the anionic portion is chloride ion (Cl⁻) and bromine ion (Br⁻).

The hot acid generating initiator used may be a commercial product, examples of which include CI-2624 and CI-2855 (both by Nippon Soda Co., Ltd.), SI-60, SI-60 L, SI-80, SI-80 L, SI-100, SI-100 L, SI-145, SI-150, SI-160, SI-180 and SI-180 L (all by Sanshin Chemical Industry Co., Ltd.), TA-90, TA-100, TA-120, TA-160, IK-1 and IK-2 (all by San-Apro Ltd.),and ADEKA OPTON CP-66 and ADEKA OPTON CP-77 (both by Adeka Corp.).

The aforementioned photoacid generating initiator may be an onium salt-type acid generator wherein the cationic portion is a complex ion, such as a sulfonium salt, diazonium salt, ammonium salt, iodonium salt, thioxanthonium salt, selenonium salt, thianthrenium salt or iron complex salt, and the anionic portion is chloride ion (Cl⁻), bromine ion (Br⁻), tetrafluoroborate (BF₄⁻), hexafluorophosphate (PF₆⁻), hexafluoroantimonate (SbF₆⁻), hexafluoroarsenate (AsF₆⁻) or hexachloroantimonate (SbCl₆⁻).

The photoacid generating initiator used may be a commercial product, examples of which include CD1010 (Sartomer Co., Inc.), WPAG-281, WPAG-336,WPAG-367 and WPI-113 (all by Wako Pure Chemical Industries, Ltd.), IPTX, CI-5102 and CI-2855 (all by Nippon Soda Co., Ltd.), UVI-6970 and UVI-6974 (all by Union Carbide), RHODORSIL Photoinitiator 2074 (Rhone-Poulenc), IRGACURE 250 (BASF Japan), SP-150, SP-151, SP-152, SP-170, SP-171 and SP-172 (all by Adeka Corp.), and CPI-100P, CPI-101A, CPI-210S and CPI-300PG (all by San-Apro Ltd.).

Azo-based initiators, peroxide initiators and persulfate initiators include benzoyl peroxide, p-chlorobenzoyl peroxide, diisopropyl peroxycarbonate, di-2-ethylhexyl peroxycarbonate and *tert*-butylperoxy pivalate, as well as 1,1'-azobiscyclohexane-1-carbonitrile, 2,2'-azobis-(2,4-dimethylvaleronitrile), 2,2'-azobis-(4-methoxy-2,4-dimethylvaleronitrile), 2,2'-azobis-(methyl isobutyrate), α,α-azobis-(isobutyronitrile) and 4,4'-azobis-(4-cyanovaleric acid).

Examples of leveling agents include silicon leveling agents, acrylic leveling agents, fluorine-based leveling agents and vinyl-based leveling agents, among which commercial products may be used.

Silicon leveling agents may be mentioned as preferred leveling agents.

Leveling agents may exhibit an antifoaming effect in the step in which the composition including an alicyclic difunctional epoxy is cast coated onto an epoxy resin undercoat primer layer and cured to form a coating film, and may also have a surface modifying function that reduces the friction coefficient of the surface of the resin layer after curing.

The proportion of leveling agent may be in the range of 0 to 5 parts by mass, such as 0 to 3 parts by mass, with respect to 100 parts by mass of the epoxy. If the amount of leveling agent is too great, the anti-wear function of the sliding member employing the obtained anti-wear agent will be impaired.

The silicon leveling agent used may be a commercial product, and examples include DC11PA, ST80PA, DC3074, DC3037 and SR2402 (all by Dow Corning Toray), KP-321, KP-324, KP-327, KR-9218 and X-40-9220 (all by Shin-Etsu Chemical Co., Ltd.), TSR165 and XR-31B1763 (both by Toshiba Silicone), BYK-341, BYK-344, BYK-306, BYK-307, BYK-325, BYK-315, BYK-320, BYK-322, BYK-323, BYK-300, BYK-302, BYK-330, BYK-333, BYK-335, BYK-370, Silclean 3700 and Silclean 3720 (all by Byk-Chemie Corp. Japan), DISPARLON 1711, 1751N, 1761, LS-001 and LS-050 (all by Kusumoto Chemicals, Ltd.), and POLYFLOW KL-400HF, KL-401, KL-402, KL-403 and KL-404 (all by Kyoei Kagaku).

The acrylic leveling agent used may also be a commercial product, examples of which include BYK-350, BYK-352, BYK-354, BYK-355, BYK-358N, BYK-361N and BYK-392 (all by Byk-Chemie Corp. Japan), DISPARLON LF-1980, LF-1982, LF-1983, LF-1984, LF-1985 and NSH-8430HF (all by Kusumoto Chemicals, Ltd.), and POLYFLOW No.50EHF, No.54N, No.55, No.77, No.85HF, No.90, No.90D-50, No.95 and No.99C (all by Kyoei Kagaku).

Fluorine-based leveling agents include the product BYK-340 (trade name of Byk-Chemie Corp. Japan).

Vinyl-based leveling agents include DISPARLON LHP-90 and LHP-91 (both products of Kusumoto Chemicals, Ltd.).

When an anti-wear agent according to an embodiment of the second invention is to be used, the coating film may be formed by curing an anti-wear agent layer comprising a difunctional bisphenol A-type epoxy resin, a leveling agent and a polymerization initiator, preferably to a thickness in the range of 10 to 75 µm, such as in the range of 15 to 50 µm, and typically a thickness of about 40 µm.

The difunctional bisphenol A-type epoxy resin may be an epoxy resin having a basic backbone represented by the following chemical formula.

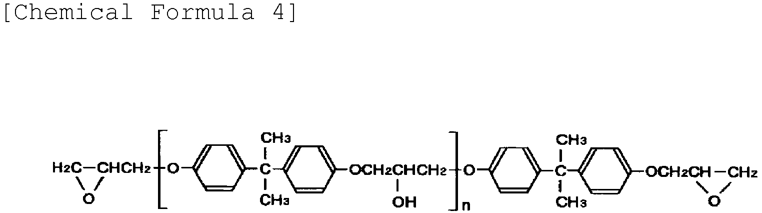

The difunctional bisphenol A-type epoxy resin is preferably one that is liquid at room temperature, from the viewpoint of easy handling and miscibility.

The difunctional bisphenol A-type epoxy resin used may be a commercial product, examples of which include JER828 (product of Mitsubishi Chemical Corp.), EPOTOTE YD-127, YD-128, YD-134, YD-001, YD-011 and YD-014 (all by Tohto Kasei Co., Ltd.), JER827, JER828, JER834, JER1001 and JER1004 (all by Japan Epoxy Resins Co., Ltd.), ARALDITEAER250, AER260, AER280 and AER6071 (all by Asahi-Ciba Ltd.) and EPOMIK R-139, R-140, R-301 and R-304 (all by Mitsui Chemicals, Inc.). These may be used alone, or two or more may be used in combination.

It is generally preferred for a difunctional bisphenol A-type epoxy resin to be used alone, but a portion thereof may be replaced by another liquid epoxy resin. Other liquid epoxy resins include bifunctional glycidyl ether-type epoxy resins, including bisphenyl group-containing epoxy resins such as bisphenol F types, brominated bisphenol A types, hydrogenated bisphenol A types, bisphenol S types, bisphenol AF types and biphenyl types, polyalkylene glycol-type and alkylene glycol-type epoxy resins, epoxy resins with naphthalene rings, and epoxy resins with fluorene groups.

Examples of leveling agents include silicon leveling agents, acrylic leveling agents, fluorine-based leveling agents and vinyl-based leveling agents, among which commercial products may be used.

Silicon leveling agents may be mentioned as preferred leveling agents.

Leveling agents may exhibit an antifoaming effect in the step in which the anti-wear agent including a difunctional bisphenol A-type epoxy resin is cast coated onto an epoxy resin undercoat primer layer and cured to form a coating film, and may have a surface modifying function that reduces the friction coefficient of the surface of the coating film after curing.

The proportion of the leveling agent is preferably in the range of 1 to 5 parts by mass with respect to 100 parts by mass of the epoxy resin. If the amount of leveling agent is too small, the anti-wear function of the obtained sliding member will be reduced.

The silicon leveling agent, acrylic leveling agent, fluorine-based leveling agent and vinyl-based leveling agent used may be any of the same mentioned above as examples for the anti-wear agent according to an embodiment of the first invention.

Polymerization initiators include cationic polymerization initiators, imidazoles, hydrazidones, acid anhydrides, liquid phenols, aromatic amines, and amine epoxy adduct types.

The proportion of the polymerization initiator will differ depending on the type of polymerization initiator, but for a cationic polymerization initiator it is preferably in the range of 0.01 to 10 parts by mass, such as 0.1 to 5 parts by mass, and for an imidazole, hydrazidone, acid anhydride, liquid phenol, aromatic amine or amine epoxy adduct type it is preferably in the range of 0.1 to 20 parts by mass, such as 0.1 to 10 parts by mass, with respect to 100 parts by mass of the epoxy resin.

The cationic polymerization initiator may be a hot acid generating initiator or a photoacid generating initiator, which generates a Lewis acid or Bronsted acid when the polymerization initiator decomposes under light or heat, with photoacid generating initiators being preferred since they allow satisfactory smoothness to be maintained.

A hot acid generating initiator or photoacid generating initiator that is used may be any of the same ones mentioned for the anti-wear agent according to an embodiment of the first invention.

Imidazoles include 2-methylimidazole, 2-undecylimidazole, 2-heptadecylimidazole, 2-phenylimidazole, 2-phenyl-4-methylimidazole, 1-benzyl-2-methylimidazole, 1-benzyl-2-phenylimidazole, dimethyl 2-(2-butylimidazol-1-yl)succinate, bis(2-isopropyl-5-methylhexyl) 2-imidazol-1-ylsuccinate and bis(2-isopropyl-5-methylhexyl) 2-(2-ethyl-4-methylimidazol-1-yl)succinate.

Hydrazines include adipic acid dihydrazide and isophthalic acid dihydrazide.

Aromatic amines include m-phenylenediamine, diaminodiphenylmethane, diaminodiphenylsulfone, diaminodiethyldiphenylmethane and monomethyldiethyl-m-phenylenediamine.

Acid anhydrides include phthalic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride and methylhexahydrophthalic anhydride. Preferred among these are tetrahydrophthalic anhydride and methyltetrahydrophthalic anhydride, because they are liquid at room temperature, are easily manageable and have high curability.

Liquid phenols include biphenols and their modified forms, including bisphenols, polycondensates of phenols (phenols, alkyl-substituted phenols, naphthols, alkyl-substituted naphthols, dihydroxybenzenes and dihydroxynaphthalenes) and aldehydes, polymers of phenols and various diene compounds, polycondensates of phenols and aromatic dimethylols, or condensation products of bismethoxymethylbiphenyls with naphthols or phenols.

Amine epoxy adducts include addition reaction products (epoxy adducts) of amines such as 2-dimethylaminoethylamine or 3-dimethylamino-N-propylamine with epoxy compounds.

In the step of forming the epoxy resin undercoat primer layer on a metal base as an example of using the anti-wear agent according to an embodiment of the invention, the epoxy resin undercoat primer will usually be cast coated onto the metal base, and then heated and/or photoirradiated with ultraviolet irradiation, for example, to form the epoxy resin undercoat primer layer.

When the epoxy resin undercoat primer is to be cast coated onto the metal base, a publicly known cast coating method, such as roll coating, brush coating or cover coating, or alternatively wire bar coating or a coating applicator, may be used for cast coating to obtain a uniform coating layer.

When a coating applicator is used it is preferably a wire bar in which a wire is tightly wound around a core metal, in order to obtain a uniform cast coating layer.

Next, in order to form an epoxy resin undercoat primer layer by heating and/or photoirradiation, such as by ultraviolet irradiation, the cast coated epoxy resin undercoat primer may be heated at a temperature of about 100 to 150°C for about 0.1 to 10 minutes, or typically about 1 minute, and then preferably irradiated with ultraviolet rays under conditions of approximately 100 to 800 mJ/cm², for curing. This can form an epoxy resin undercoat primer layer having a thickness of preferably in the range of 0.2 to 5 µm, such as in the range of 0.2 to 3 µm, or typically about 2 µm. Some of the curing of the epoxy resin undercoat primer may be carried out by heating and/or photoirradiation, such as ultraviolet irradiation, during curing to form the coating film in a later step.

For the application example described above, there is provided an anti-wear agent layer comprising the alicyclic difunctional epoxy and the polymerization initiator on the epoxy resin undercoat primer layer, or an anti-wear agent layer comprising the alicyclic difunctional epoxy, the polymerization initiator and a leveling agent, or an anti-wear agent layer comprising the difunctional bisphenol A-type epoxy resin, the leveling agent and the polymerization initiator.

The anti-wear agent according to an embodiment of the invention is preferably one that is a liquid at room temperature, from the viewpoint of easy handling.

In the step of providing an anti-wear agent layer on the undercoat primer layer, a publicly known cast coating method, such as roll coating, brush coating or cover coating, or alternatively wire bar coating or a cast coating device, may be used to obtain a uniform anti-wear agent layer. The cast coating device used is preferably a wire bar in which a wire is tightly wound around a core metal, in order to obtain a uniform cast coating layer.

For this application example, the curing of the anti-wear agent layer to form the coating film can be carried out with appropriate selection of the curing conditions according to the type of polymerization initiator used. For example, the anti-wear agent layer may be subjected to curing treatment such as (1) curing by heating, (2) curing by heating → photoirradiation, such as ultraviolet irradiation, or (3) curing by heating or photoirradiation, such as ultraviolet irradiation, to decompose the polymerization initiator and generate an acid → heat curing, to form the coating film. The heating may be a method of heating at a temperature in the range of 80 to 200°C, such as a temperature in the range of 125 to 200°C (for example, 125 to 175°C), for 10 minutes to 5 hours (for example, about 30 minutes to 2 hours), or photoirradiation with irradiation treatment under ultraviolet irradiation conditions of 200 to 1000 mJ/cm² (for example, 200 to 500 mJ/cm²). The heating may be carried out at the same temperature during the heating period, or heat treatments at different temperatures may be carried out during the heating period. In the latter case, the heat treatment may be treatment in which initial heating is carried out at 80 to 125°C for about 0.1 to 5 minutes, and subsequent heating is carried out at 125 to 200°C for about 30 minutes to 2 hours. In either case, heating can be carried out with a shorter heating time if a higher temperature is used. According to an embodiment of the invention, preferably the coating film is formed using a photoacid generating initiator as the polymerization initiator, subjecting the anti-wear agent layer to heating → photoirradiation (for example, decomposition of the polymerization initiator by ultraviolet irradiation to generate an acid) → further heat curing.

This method can form an epoxy resin-based coating film with anti-wear properties.

### Examples

Examples of the invention will now be described.

The examples described below serve merely for comparison between the anti-wear agent of the invention and anti-wear agents outside of the scope of the invention, and are not intended to limit the invention.

In each of the following examples, evaluation was made by the following method to compare the performance of the anti-wear agents.

### [Evaluation methods]

The anti-wear properties of an aluminum sheet coated on one side with a hard coat, under oil coating conditions, were evaluated by a ball-on-disc reciprocating sliding test, under the following conditions.

Tester: Testing was conducted with a test time of 5 minutes, using a Dual Microtester by Takachi Hoseiki Co., Ltd., and a ball with an SUJ2 constituent material and a shape of φ10 mm, under a 10N total test load, and using a 10 mm amplitude, Castle Oil SN/GF-5 OW-20 as the oil and an oil temperature of 80°C.

### [Evaluation]

The dynamic friction coefficient was adjusted from the start of the sliding test until an elapse of 30 seconds, 2 to 3 minutes and 4 to 5 minutes, based on the results of the test, and the change in value as sliding progressed was observed. The mean dynamic friction coefficient for all of the test times was calculated (mean value for n = 3).

Formation of irregularities in the sliding imprint was also observed.

The anti-wear property was evaluated as follows, based on the dynamic friction coefficient and irregularities in the sliding imprint.
G (Good): Mean dynamic friction coefficient ≤0.035, no irregularities seen in sliding imprint.
F (Fair): Mean dynamic friction coefficient >0.035, or irregularities seen in sliding imprint.
P (Poor): Mean dynamic friction coefficient >0.035, and irregularities seen in sliding imprint.

### Example 1

There was prepared a mixed solution comprising 5 mass% of Silclean 3720 (product of Byk-Chemie Corp. Japan, 25 mass% solid content) as a silicon leveling agent and 3 mass% of CPI-300PG (photoacid generator, 50 mass% solid content, product of San-Apro Ltd.) as a polymerization initiator, added to 3,4,3',4'-diepoxybicyclohexyl as an alicyclic difunctional epoxy resin, for use as a hard coat solution (anti-wear agent).

After cast coating Ray Magic 07 (product of Kanae Paint Co., Ltd.) on one side of an aluminum sheet (mirror surface) using a wire bar (#3), it was allowed to stand for 1 minute in an oven at 100°C, and then subjected to ultraviolet irradiation at 400 mJ/cm² to form an epoxy resin undercoat primer layer with a thickness of approximately 2 µm. The hard coat solution was then cast coated onto the undercoat primer layer side using a wire bar (#30), and allowed to stand for 1 minute in an oven at 100°C, after which it was subjected to ultraviolet irradiation at 400 mJ/cm² and finally heated at 150°C for 1 hour for heat treatment, to cure the coated hard coat solution film and prepare an aluminum sheet having an approximately 2 µm epoxy resin undercoat primer layer and a hard coat layer (coating film) with a thickness of 41 µm.

The obtained sample was subjected to an anti-wear performance test.

A result of G (Good) was obtained.

### Comparative Example 1

A mixed solution was prepared comprising 10 mass% of EB1360 (product of Daicel-Allnex, Ltd., silicon-containing acrylate, solid content: 100 mass%) as a silicon leveling agent and 5 mass% of IRGACURE 184 (product of BASF, radical initiator, solid content: 100 mass%) as a polymerization initiator, added to a difunctional acrylate-based resin (product name: IRR214K by Daicel-Allnex, Ltd., solid content: 100 mass%), instead of an epoxy resin, to obtain a hard coat solution (anti-wear agent).

An undercoat primer layer was formed in the same manner as Example 1, except for using KBM303 (silane coupling agent, solid concentration: 100 mass%) by Shin-Etsu Chemical Co., Ltd. as the undercoat primer on one side of an aluminum sheet (mirror surface), after which an aluminum sheet having an approximately 2 µm undercoat primer layer and a hard coat layer (coating film) with a thickness of 40 µm, was produced in the same manner as Example 1, except for using the aforementioned hard coat solution instead of the hard coat solution of Example 1.

The obtained sample was subjected to an anti-wear test.

A result of F (Fair) was obtained.

### Example 2

There was prepared a mixed solution comprising 100 parts by mass of JER828 (liquid, difunctional bisphenol A-type epoxy resin, product of Mitsubishi Chemical Corp.) as an epoxy resin, 4 parts by mass of Silclean 3720 (product of Byk-Chemie Corp. Japan, solid content: 25 mass%) as a silicon leveling agent, and 0.5 part by mass of CPI-300PG (product of San-Apro Ltd., nonvolatile content: 50 mass%,) as a polymerization initiator, to obtain a hard coat solution (anti-wear agent).

After cast coating Ray Magic 07 (product of Kanae Paint Co., Ltd.) on one side of an aluminum sheet (mirror surface) using a wire bar (#3), it was allowed to stand for 1 minute in an oven at 100°C, and then subjected to ultraviolet irradiation at 400 mJ/cm² to form an epoxy resin undercoat primer layer with a thickness of approximately 2 µm. The hard coat solution was then cast coated onto the undercoat primer layer side using a wire bar (#30), and allowed to stand for 1 minute in an oven at 100°C, after which it was subjected to ultraviolet irradiation at 400 mJ/cm² and finally heated at 150°C for 1 hour for heat treatment, to cure the coated hard coat solution film and prepare an aluminum sheet having an approximately 2 µm epoxy resin undercoat primer layer and a hard coat layer (coating film) with a thickness of 40 µm.

The obtained sample was subjected to an anti-wear performance test.

A result of G (Good) was obtained.

### Industrial Applicability

According to the invention it is possible to obtain an epoxy resin-based anti-wear agent with anti-wear properties.

### Explanation of Symbols

1 Coating film
2 Metal base
3 Epoxy resin undercoat primer layer
10 Sliding member employing anti-wear agent according to embodiment of the invention

## Claims

1. An anti-wear agent comprising an alicyclic difunctional epoxy and a polymerization initiator.

2. The anti-wear agent according to claim 1, wherein the alicyclic difunctional epoxy is 3,4,3',4'-diepoxybicyclohexyl represented by the following formula.

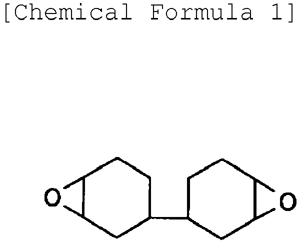

3. The anti-wear agent according to claim 1 or 2, wherein the resin layer further comprises a leveling agent.

4. The anti-wear agent according to claim 3, wherein the leveling agent is a silicon leveling agent.

5. The anti-wear agent according to claim 3 or 4, wherein the proportion of the leveling agent is 0 to 5 parts by mass with respect to 100 parts by mass of the epoxy.

6. An anti-wear agent comprising a difunctional bisphenol A-type epoxy resin, a leveling agent and a polymerization initiator.

7. The anti-wear agent according to claim 6, wherein the difunctional bisphenol A-type epoxy resin has a basic backbone represented by the following chemical formula.

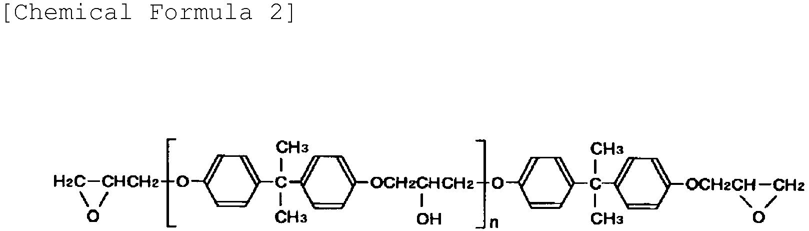

8. The anti-wear agent according to claim 6 or 7, wherein the leveling agent is a silicon leveling agent.

9. The anti-wear agent according to any one of claims 6 to 8, wherein the proportion of the leveling agent is 1 to 5 parts by mass with respect to 100 parts by mass of the epoxy.

10. The anti-wear agent according to any one of claims 1 to 9, wherein the polymerization initiator is a photoacid generating initiator.
